# EUROPEAN PATENT APPLICATION

(11) **EP 4 564 521 A1**
(43) Date of publication of application: **04.06.2025**
(21) Application number: 24197592.9
(22) Date of filing: 30.08.2024
(51) Int. Cl.: H01M 10/48, H01M 10/615, H01M 10/65, H01M 10/653, H01M 10/6551, H01M 10/6571, H01M 50/204, H01M 50/284, H01M 50/503, H01M 50/507, H01M 50/521, H01M 50/526, H01M 10/42

(54) **BUSBAR HEATING APPARATUS AND BATTERY MODULE**

(30) Priority: 30.11.2023 KR 20230171231
(71) Applicant: SAMSUNG SDI CO., LTD., Giheung-gu Yongin-si, Gyeonggi-do 17084 (KR)
(72) Inventor: Park, Kyung Hoon, 16678 Suwon-si, Gyeonggi-do (KR); Park, Jun Hwa, 16678 Suwon-si, Gyeonggi-do (KR)
(74) Representative: Gulde & Partner

(57) **Abstract**

The present disclosure relates to a busbar heating apparatus and a battery module and is directed to providing a busbar heating apparatus, which heats a busbar to suppress the degradation of a battery module in a low-temperature environment, and a battery module including the same. To this end, the present disclosure provides a busbar heating apparatus (100A,100B) including a plurality of heating parts (101), each of the plurality of heating parts including a heating material heated by electric energy and being in contact with a plurality of busbars (40) of a battery module to heat the plurality of busbars, and one or more connecting parts (110) electrically connecting the plurality of heating parts.

## Description

### BACKGROUND

### 1. Field

A busbar heating apparatus and a battery module are disclosed.

### 2. Description of the Related Art

As the demand for portable electronic products such as notebook computers, video cameras, and portable phones increases rapidly and commercialization of robots, electric vehicles, and the like begins in earnest, it is desirable to obtain high-performance secondary batteries capable of repeated charging and discharging.

Secondary batteries for driving devices or energy storage are widely used in not only small devices such as portable electronic devices, but also in medium-to-large devices such as electric vehicles and energy storage systems (ESSs). Particularly, in the case of the medium-to-large devices, one battery module is formed in a form in which a plurality of battery cells are electrically connected to each other to increase the output power and/or capacity of the battery.

It is known that the charge and discharge performance of the battery module at temperatures below zero, that is, at low temperatures, is lower than the charge and discharge performance at room temperature and the decrease of the charge and discharge performance is proportional to the decrease of the temperature.

The aforementioned information disclosed in this background section is merely for enhancement of understanding of the background technology of the present disclosure, and therefore may contain information that does not constitute the related art.

### SUMMARY

An aspect of the present disclosure is directed to a busbar heating apparatus, which heats a busbar to suppress the degradation of a battery module in a low-temperature environment, and a battery module.

However, technical objectives to be achieved by the present disclosure are not limited to the above-described objectives, and other objectives that are not described above will be clearly understood by those skilled in the art through the following description of the disclosure.

According to one or more embodiments, a busbar heating apparatus includes a plurality of heating parts, each of the plurality of heating parts including a heating material heated by electric energy and being in contact with a plurality of busbars of a battery module to heat the plurality of busbars, and one or more connecting parts electrically connecting the plurality of heating parts.

The heating material may include carbon nanotubes.

The heating material may be in direct contact with the busbars.

The plurality of heating parts and the one or more connecting parts may be alternately disposed.

The connecting part may be spaced apart from the busbars.

The connecting part may include a pair of protective film layers which overlap and are bonded and an electric wire formed of a conductive material and extending in the pair of protective film layers.

The heating parts may further include a protective film layer attached to the heating material, and the busbar heating apparatus may further include busbar coupling parts disposed around the plurality of heating parts and the busbar heating apparatus may be fixedly coupled to the protective film layer and the busbars so that contact between the plurality of heating parts and the plurality of busbars is maintained.

The busbar coupling parts may be welded to the busbars.

The busbar coupling part may include a metal layer which is formed of a metal material and whose one side is welded to the busbar and the other side is attached to the protective film layer.

The busbar coupling part may include a double-sided adhesive tape whose one side and the other side are fixedly attached to the busbar and the protective film layer.

The busbar heating apparatus may further include a plurality of terminal parts electrically coupled to the busbars to supply the electric energy to the plurality of heating parts.

The busbar heating apparatus may further include a switch part which supplies a current to the plurality of heating materials to heat the plurality of heating materials when a first temperature of the battery module is lower than a predetermined reference temperature and blocks the current being supplied to the plurality of heating materials when the first temperature of the battery module is higher than the reference temperature or equal to the reference temperature.

The switch part may be accommodated in one of the one or more connecting parts.

According to one or more embodiments, a battery module includes a plurality of battery cells, a plurality of busbars which electrically connect the plurality of battery cells, and a busbar heating apparatus including a heating material heated by electric energy, a plurality of heating parts in contact with the plurality of busbars to heat the plurality of busbars, and one or more connecting parts electrically connecting the plurality of heating parts.

Preferably, the connecting part is spaced apart from the busbars.

Preferably, the heating parts further include a protective film layer attached to the heating material. The busbar heating apparatus may further include busbar coupling parts disposed around the plurality of heating parts and fixedly coupled to the protective film layer and the busbars so that contact between the plurality of heating parts and the plurality of busbars is maintained.

The busbar coupling parts may be welded to the busbars. The busbar coupling parts may include a metal layer which is formed of a metal material, wherein one side of the metal layer may be welded to the busbar and the other side may be attached to the protective film layer.

The busbar coupling parts may include a double-sided adhesive tape, wherein one side of the double-sided adhesive tape may be fixedly attached to the busbar and the other side may be fixedly attached to the protective film layer.

Each of the plurality of busbars may include a first cell coupling part electrically coupled to one battery cell of the plurality of battery cells, a second cell coupling part electrically coupled to another battery cell of the plurality of battery cells, and an intermediate portion which is located between the first cell coupling part and the second cell coupling part and is in contact with the heating part.

The plurality of battery cells may be arranged in one line in one direction, the busbar heating apparatus may be provided as a pair of busbar heating apparatuses, and the pair of busbar heating apparatuses may be spaced apart from each other and extend in the one direction.

The battery module may further include a flexible printed circuit assembly (FPCA) including a voltage sensor for measuring voltages of the plurality of busbars, a temperature sensor for measuring temperatures of the plurality of battery cells, and a control wire electrically connecting the voltage sensor and the temperature sensor to a battery management system (BMS).

Each of the plurality of battery cells may include a cell vent for discharging a gas from inside to outside of the battery cell, and the cell vent may be located in one side surface of the battery cell which does not face the FPCA.

The heating material may include carbon nanotubes.

The plurality of heating parts and the one or more connecting parts may be alternately disposed.

### BRIEF DESCRIPTION OF THE DRAWINGS

Features will become apparent to those of skill in the art by describing in detail exemplary embodiments with reference to the attached drawings in which:
FIG. 1 is a perspective view illustrating a battery module according to one embodiment of the present disclosure;
FIG. 2 is a plan view illustrating the battery module according to one embodiment of the present disclosure;
FIG. 3 is an exploded perspective view illustrating a plurality of battery cells, a plurality of busbars, and a pair of busbar heating apparatuses included in the battery module according to one embodiment of the present disclosure;
FIG. 4 is a cross-sectional view along line IV-IV of FIG. 3;
FIG. 5 is an enlarged cross-sectional view illustrating portion A of FIG. 4;
FIG. 6 is an enlarged plan view illustrating the pair of busbar heating apparatuses illustrated in FIG. 3;
FIG. 7 is an enlarged cross-sectional view along line B-B of FIG. 6, showing a busbar coupled to a busbar heating apparatus according to a first embodiment of the present disclosure;
FIG. 8 is an enlarged cross-sectional view showing a busbar heating apparatus and a busbar connected according to a second embodiment of the present disclosure;
FIG. 9 is an enlarged cross-sectional view showing a busbar heating apparatus and a busbar connected according to a third embodiment of the present disclosure; and
FIG. 10 is an enlarged perspective view showing a portion of the busbar heating apparatus of FIG. 3 and a busbar aligned with the portion of the busbar heating apparatus.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms, e.g., the terms are not intended to imply or require sequential inclusion. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. In an implementation, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, e.g., 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, e.g., a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified. The terms used in the present specification are for describing embodiments of the present disclosure and are not intended to limit the present disclosure.

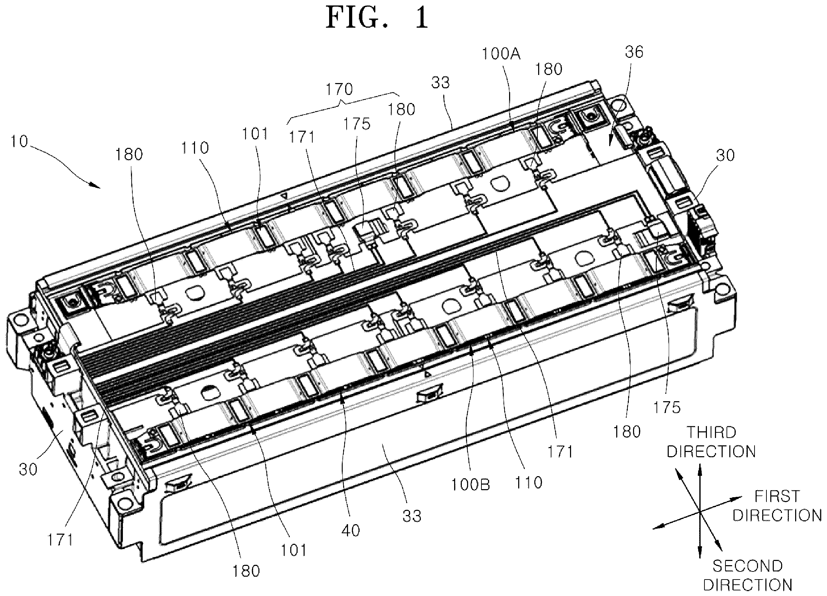

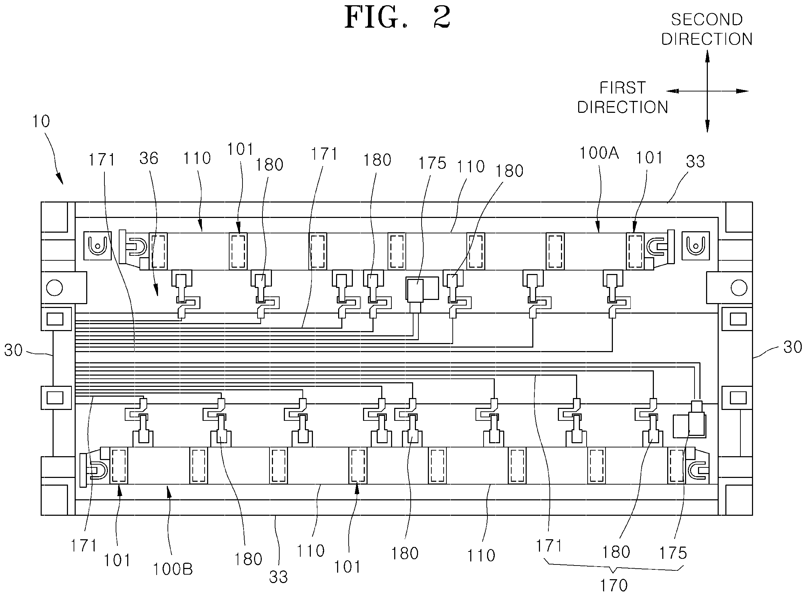

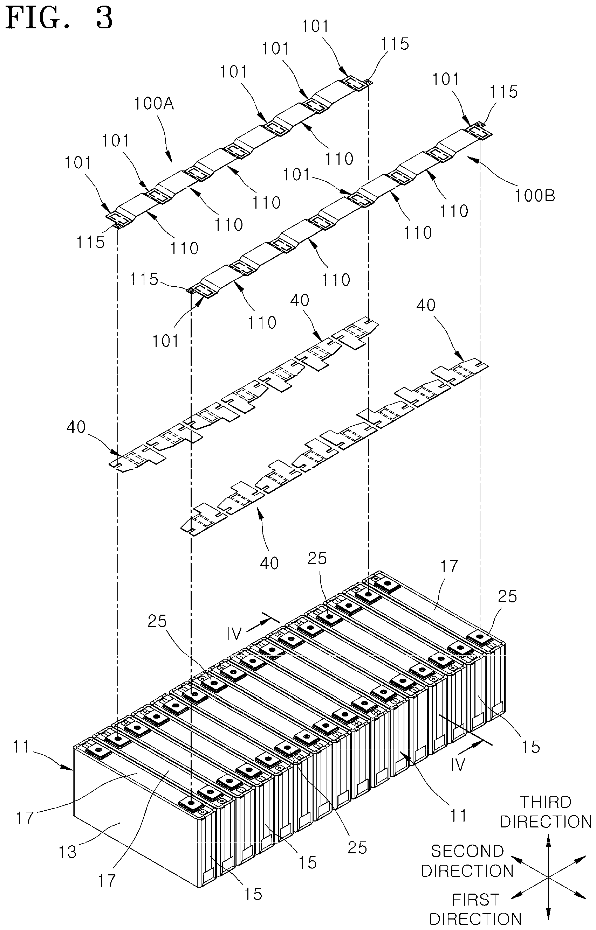

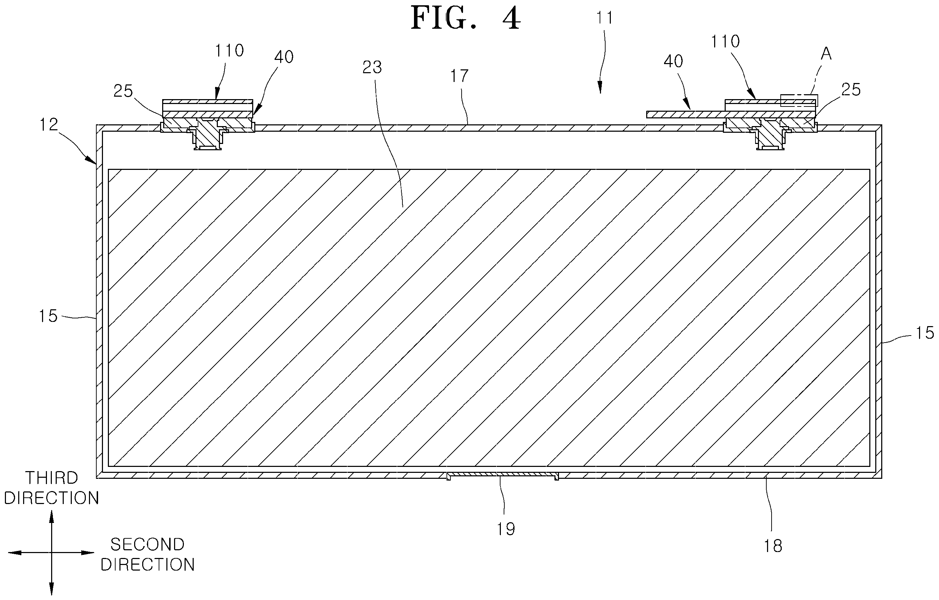

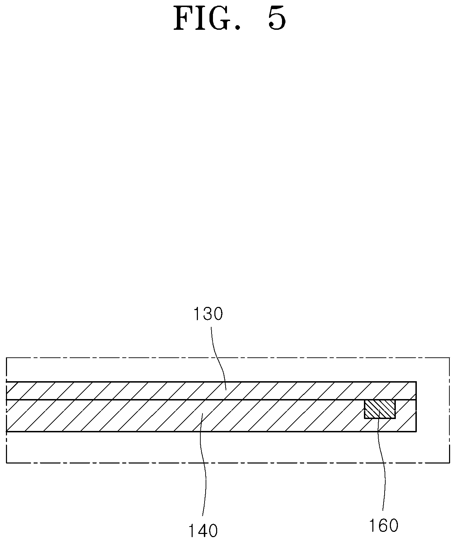

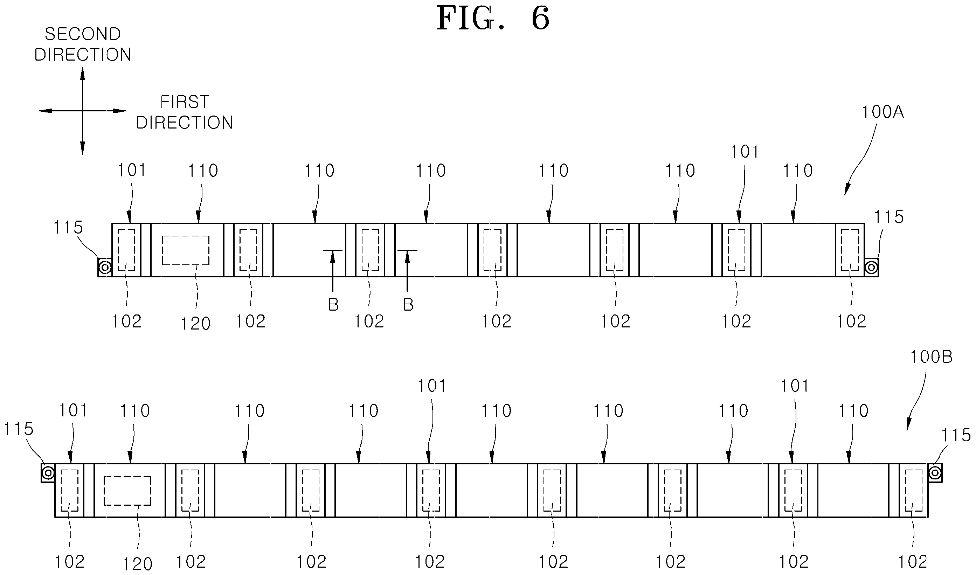

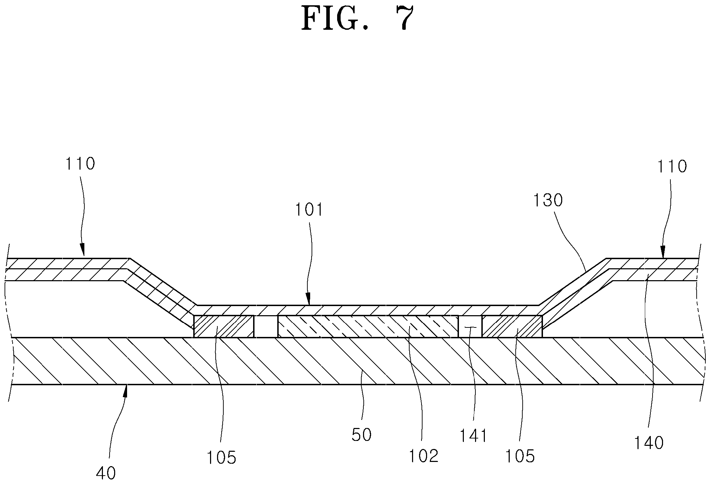

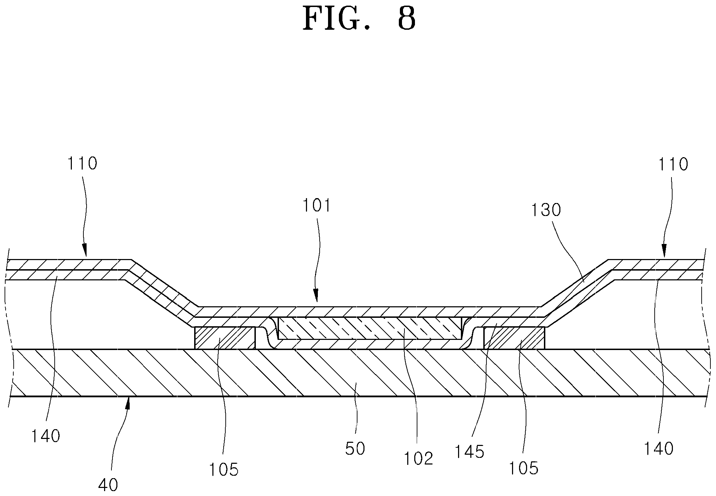

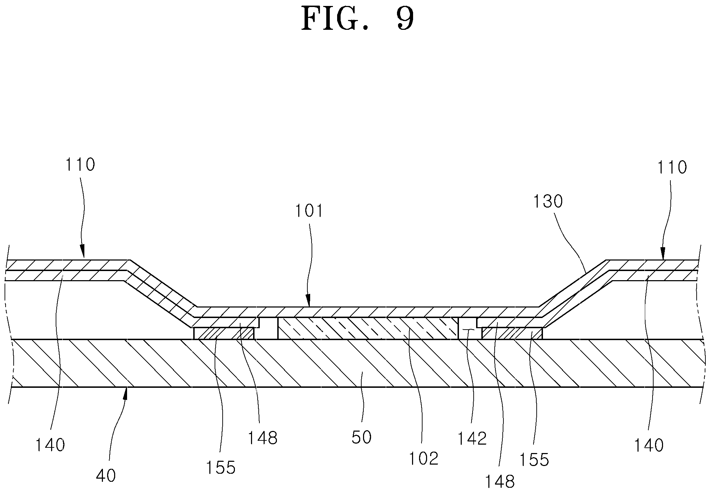

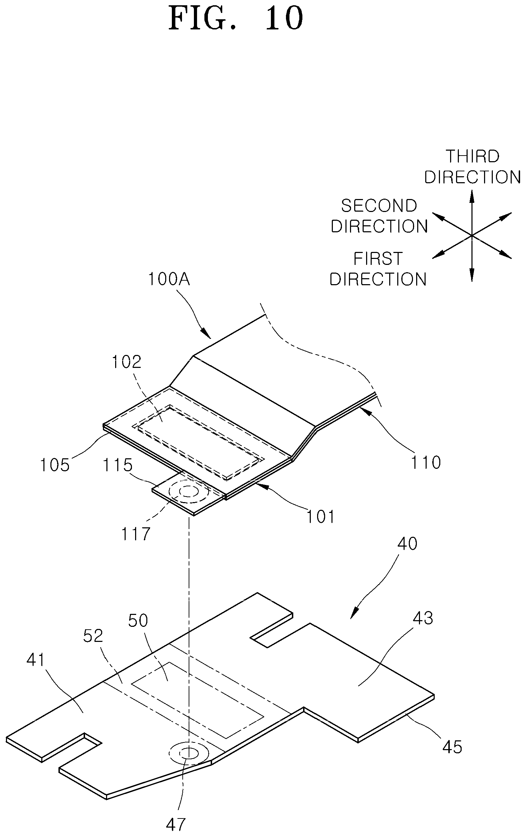

FIG. 1 is a perspective view showing a battery module according to an example embodiment. FIG. 2 is a plan view showing the battery module according to an example embodiment. FIG. 3 is an exploded perspective view showing a plurality of battery cells, a plurality of busbars, and a pair of busbar heating apparatuses included in the battery module according to an example embodiment. FIG. 4 is a cross-sectional view along line IV-IV of FIG. 3. FIG. 5 is an enlarged cross-sectional view showing portion A of FIG. 4. FIG. 6 is an enlarged plan view showing the pair of busbar heating apparatuses illustrated in FIG. 3. FIG. 7 is an enlarged cross-sectional view along line B-B of FIG. 6, showing a busbar coupled to a busbar heating apparatus according to an example embodiment. FIG. 8 is an enlarged cross-sectional view showing a busbar heating apparatus and a busbar connected according to an example embodiment. FIG. 9 is an enlarged cross-sectional view showing a busbar heating apparatus and a busbar connected according to an example embodiment. FIG. 10 is an enlarged perspective view showing a portion of the busbar heating apparatus and a busbar aligned with the portion of the busbar heating apparatus.

Referring to FIGS. 1 to 7 and 10, a battery module 20 may include a plurality of battery cells 11, a plurality of busbars 40, and busbar heating apparatuses 100A and 100B. Each of the battery cells 11 may include a cell case 12, a pair of cell terminals 25, and an electrode assembly 23.

The electrode assembly 23 may be accommodated in the cell case 12. The electrode assembly 23 may be formed by winding or stacking stacks each including a first electrode plate, a separator, and a second electrode plate, each of which may be formed in a thin plate shape or thin membrane shape.

When the electrode assembly 23 is a wound stack, a winding axis of the electrode assembly 23 may be parallel to a longitudinal direction of the cell case 12. The electrode assembly 23 may be a stacked type instead of a wound type . The electrode assembly 23 may be a Z-stack electrode assembly in which a positive electrode plate and a negative electrode plate are inserted between both sides of the separator bent in a Z-stack. One or more electrode assemblies 23 may be stacked and accommodated in the cell case 12 so that long side surfaces thereof are close to each other. A first electrode plate of the electrode assembly 23 may serve as a negative electrode, and a second electrode plate may serve as a positive electrode. The opposite is also possible.

The first electrode plate may be formed by coating a first electric current collector plate, which may be formed of a metal foil such as a copper, copper alloy, nickel, or nickel alloy foil, with a first electrode active material such as graphite or carbon and may include a first electrode tab (or first non-coating portion) which is a region not coated with the first electrode active material. The first electrode tab may be a path of a current flow between the first electrode plate and a first current collector part. In some examples, the first electrode tab may protrude toward one side by cutting the first electrode plate when the first electrode plate is manufactured and may protrude toward one side further than the separator without additional cutting.

The second electrode plate may be formed by coating a second electric current collector plate, which may be formed of a metal foil such as an aluminum or aluminum alloy foil, with a second electrode active material such as a transition metal oxide and may include a second electrode tab (or second non-coating portion) which may be a region not coated with the second electrode active material. The second electrode tab may be a path of a current flow between the second electrode plate and a second current collector part. In some examples, the second electrode tab may protrude toward the other side by cutting the second electrode plate when the second electrode plate is manufactured and may protrude toward the other side further than the separator without additional cutting.

In some examples, the first electrode tab may be located on a side surface of a left end of the electrode assembly, the second electrode tab may be located on a side surface of a right end of the electrode assembly, or the first electrode tab and the second electrode tab may be located on one surface in the same direction. In this case, the left side and the right side are for convenience of the description, and the sides may be changed when the battery cell 11 rotates in a left-right or vertical direction.

The first electrode tab of the first electrode plate and the second electrode tab of the second electrode plate may be located on both end portions of the electrode assembly 23. In some examples, the electrode assembly 23 may be accommodated in a case along with an electrolyte. In addition, in the electrode assembly 23, the first current collector part and the second current collector part may be welded and connected to and located at the first electrode tab of the first electrode plate and the second electrode tab of the second electrode plate, respectively.

The cell case 12 may have a substantially rectangular parallelepiped shape and accommodate the electrode assembly 23 and the electrolyte therein. The cell case 12 may include a metal can with one open side and a cap plate for closing the open one side of the metal can. The pair of cell terminals 25 may be installed on the cap plate to protrude outward from the cap plate.

One cell terminal 25 of the pair of cell terminals 25 may be electrically connected to one current collector part of the first current collector part and the second current collector part, and the other cell terminal 25 may be electrically connected to the other current collector part of the first current collector part and the second current collector part. Accordingly, one cell terminal 25 of the pair of cell terminals 25 may be a positive electrode terminal, and the other cell terminal 25 thereof may be a negative electrode terminal.

The pair of cell terminals 25 may be located on both end portions of the cap plate in the longitudinal direction. One surface of the cell case 12 from which the pair of cell terminals 25 protrude may be an upper surface 17 of the cell case 12, one surface opposite to the upper surface 17 of the cell case 12 may be a lower surface 18 of the cell case 12, and a pair of surfaces which connect the upper surface 17 and the lower surface 18 and are disposed opposite to each other may be a pair of side surfaces 15 of the cell case 12.

Each of the battery cells 11 may include a cell vent 19 which may burst to discharge emissions such as gas and a flame material from the inside to the outside of the battery cell 11 when high-temperature gas or a flame material are generated due to overcharging or abnormal operation in the cell case 12. The cell vent 19 may be located in the lower surface 18 of the cell case 12.

The plurality of battery cells 11 may be arranged in a line in a front-rear direction. Rear surfaces of a pair of adjacent battery cells 11 among the plurality of battery cells 11 may face a front surface 13 of the cell case 12.

Hereinafter, the front-rear direction in which the plurality of battery cells 11 are arranged in the line may be referred to as a first direction, a width direction of the cell case 12 perpendicular to the first direction, that is, the left-right direction, may be referred to as a second direction, and a vertical direction perpendicular to the first direction and the second direction may be referred to as a third direction.

The battery module 10 may further include a pair of end frames 30 and a pair of side plates 33. One end frame 30 of the pair of end frames 30 may be in front of the plurality of battery cells 11 to hide the front surface 13 of the battery cell 11 located at the frontmost side of the plurality of battery cells 11 arranged in the first direction.

The other end frame 30 of the pair of end frames 30 may be behind the plurality of battery cells 11 to hide a rear surface of the battery cell 11 located at a rearmost side of the plurality of battery cells 11 arranged in the first direction.

The pair of side plates 33 may hide the pair of side surfaces 15 of the plurality of battery cells 11 and be in close contact with the side surfaces 15. Front end portions and rear end portions of the pair of side plates 33 may be connected to both end portions of the pair of end frames 30 in the second direction by, e.g., a method of welding or applying an adhesive.

The plurality of busbars 40 may electrically connect the plurality of battery cells 11. Each of the busbars 40 may be in contact with the positive cell terminal 25 of one battery cell 11 of the pair of adjacent battery cells 11 in the first direction and the negative cell terminal 25 of the other battery cell 11 thereof to electrically connect the positive cell terminal 25 and the negative cell terminal 25. The plurality of busbars 40 may be arranged in two virtual lines extending in the first direction and spaced apart from each other.

Each of the busbars 40 may include a first cell coupling part 41, a second cell coupling part 43, and an intermediate portion 50. The first cell coupling part 41 may be electrically coupled to the cell terminal 25 of one battery cell 11 of the pair of adjacent battery cells 11. The second cell coupling part 43 may be electrically coupled to the cell terminal 25 of the other battery cell 11 of the pair of adjacent battery cells 11. The intermediate portion 50 may be located between the first cell coupling part 41 and the second cell coupling part 43. The first cell coupling part 41 and the second cell coupling part 43 may be bonded to the corresponding cell terminals 25 by welding.

The battery module 10 may further include a busbar holder 36. The plurality of busbars 40 may be supported by the busbar holder 36, and the busbar holder 36 may be coupled to upper end portions of the pair of side plates 33.

The busbar heating apparatuses 100A and 100B heat the plurality of busbars 40 when the plurality of battery cells 11 and the battery module 10 are in a low-temperature state. The busbar heating apparatuses 100A and 100B may be provided as a pair of busbar heating apparatuses 100A and 100B. A first busbar heating apparatus 100A of the pair of busbar heating apparatuses 100A and 100B may heat the plurality of busbars 40 along one line among the plurality of busbars 40 arranged in two lines, and a second busbar heating apparatus 100B of the pair of busbar heating apparatuses 100A and 100B may heat the plurality of busbars 40 along the other line among the plurality of busbars 40 arranged in two lines.

Each of the first busbar heating apparatus 100A and the second busbar heating apparatus 100B may include a plurality of heating parts 101, a plurality of connecting parts 110, a plurality of busbar coupling parts, a plurality of terminal parts 115, and a switch part 120. Each of the plurality of heating parts 101 may include a heating material 102 which may emit heat using electric energy. The plurality of heating parts 101 may be in contact with intermediate portions 50 of the plurality of busbars 40 to heat the plurality of busbars 40.

The heating material 102 may be formed by curing a paste mixed with carbon nanotubes and a metal. In an implementation, the metal included in the heating material 102 may be at least one metal among silver (Ag), copper (Cu), nickel (Ni), gold (Au), platinum (Pt), and palladium (Pd). As used herein, the terms "or" and "and/or" are not exclusive terms, and include any and all combinations of one or more of the associated listed items, e.g., "A and/or B" would include A, B, or A and B.

The plurality of connecting parts 110 may electrically connect the plurality of heating parts 101. The plurality of heating parts 101 and the plurality of connecting parts 110 may be alternately disposed in the first direction. The heating part 101 may overlap the intermediate portion 50 in the third direction, and the connecting part 110 may overlap the first cell coupling part 41 or the second cell coupling part 43 of the busbar 40 in the third direction.

The connecting part 110 may be spaced apart from the busbar 40. In other words, the connecting part 110 may be spaced apart from the overlapping first cell coupling part 41 or second cell coupling part 43 in the third direction. The number of connecting parts 110 may be the number of heating parts 101 spaced apart therefrom in the first direction minus one. Accordingly, when the number of heating parts 101 spaced apart from each other in the first direction is two, the number of connecting parts 110 may be one.

Each of the first busbar heating apparatus 100A and second busbar heating apparatus 100B may include a pair of protective film layers 130 and 140 which may overlap and be connected. The protective film layers 130 and 140 may be formed of, e.g., a polyimide (PI) or polyethylene naphthalate (PEN) material. The pair of protective film layers 130 and 140 may be distributed on a region of the plurality of heating parts 101 and the plurality of connecting parts 110. A second protective film layer 140 of the pair of protective film layers 130 and 140 may be closer to the busbar 40 than a first protective film layer 130.

The connecting part 110 may include the pair of protective film layers 130 and 140 which may overlap and be connected and an electric wire 160 formed of a conductive material and extending in the pair of protective film layers 130 and 140.

In a region of the heating part 101, a side surface of the first protective film layer 130 facing the busbar 40, that is, a lower surface of the first protective film layer 130, may be attached to the heating material 102. In other words, the heating material 102 may be attached to and supported by the lower surface of the first protective film layer 130.

The busbar coupling part may be disposed around the heating part 101 and fixedly coupled to the busbar 40. The busbar coupling part may be welded to the busbar 40. The busbar coupling part may include a metal layer 105 which may be formed of a metal material and whose one side may be welded to the busbar 40 and the other side may be attached to the protective film layer 130 in the third direction.

The metal layer 105 may be formed of, e.g., a copper material. The metal layer 105 may be spaced apart from the heating material 102 and not electrically connected to the heating material 102 and may be formed in a planar shape surrounding the heating material 102. One side surface of the metal layer 105 facing the busbar 40, that is, a lower surface of the metal layer 105, may be welded to the busbar 40.

The other side surface of the metal layer 105, that is, an upper surface of the metal layer 105 opposite to the lower surface of the metal layer 105, may be attached to and supported by the lower surface of the first protective film layer 130. An open opening 141 to expose the heating material 102 and the metal layer 105 to face the busbar 40 may be formed in the second protective film layer 140.

According to the above configuration, the heating material 102 may be in direct contact with the intermediate portion 50 of the busbar 40. Since the metal layer 105 of the busbar coupling part may be welded to the busbar 40, the contact between the heating part 101 and the busbar 40 can be reliably maintained. A heating apparatus coupling part 52 welded to the metal layer 105 may be formed around the intermediate portion 50 of the busbar 40.

The heating part 101 and the busbar coupling part may have shapes of a heating part 101 and a busbar coupling part of each of busbar heating apparatuses 100A and 100B according to the second embodiment of the present disclosure illustrated in FIG. 8. Referring to FIG. 8, the heating part 101 may include a heating material 102 which may emit heat using electric energy. The heating part 101 may be in contact with an intermediate portion 50 of a busbar 40 to heat the busbar 40.

The heating material 102 may be formed by curing a paste mixed with carbon nanotubes and a metal. In an implementation, the metal included in the heating material 102 may be at least one metal among silver (Ag), copper (Cu), nickel (Ni), gold (Au), platinum (Pt), and palladium (Pd).

In a region of the heating part 101, the heating material 102 may be between a first protective film layer 130 and a second protective film layer 140. An upper surface of the heating material 102 may be attached to a lower surface of the first protective film layer 130, and a lower surface of the heating material 102 may be attached to an upper surface of the second protective film layer 140.

The busbar coupling part may be disposed around the heating part 101 and fixedly coupled to the busbar 40. The busbar coupling part may be welded to the busbar 40. The busbar coupling part may include a metal layer 105 which may be formed of a metal material and whose one side may be welded to the busbar 40 and the other side may be attached to the protective film layer 140.

The metal layer 105 may be formed of, e.g., a copper material. The metal layer 105 may be spaced apart from the heating material 102 and not electrically connected to the heating material 102 and may be formed in a planar shape surrounding the heating material 102. One side surface of the metal layer 105 facing the busbar 40, that is, a lower surface of the metal layer 105, may be welded to the busbar 40.

The other side surface of the metal layer 105, that is, an upper surface of the metal layer 105 opposite to the lower surface of the metal layer 105, may be attached to and supported by a lower surface of the second protective film layer 140. A metal layer fixing part 145 which may be attached to the metal layer 105 to support the metal layer 105 may be formed around the heating material 102 on the second protective film layer 140.

The heating material 102 may be in indirect contact with the intermediate portion 50 of the busbar 40 with the second protective film layer 140 interposed therebetween. The metal layer 105 of the busbar coupling part may be welded to a heating apparatus coupling part 52 around the intermediate portion 50 of the busbar 40. Accordingly, the contact between the heating part 101 and the busbar 40 can be reliably maintained.

The heating part 101 and the busbar coupling part may have shapes of a heating part 101 and a busbar coupling part of each of busbar heating apparatuses 100A and 100B according to the third embodiment of the present disclosure illustrated in FIG. 9. Referring to FIG. 9, the heating part 101 may include a heating material 102 which may emit heat using electric energy. The heating part 101 may be in contact with an intermediate portion 50 of a busbar 40 to heat the busbar 40.

The heating material 102 may be formed by curing a paste mixed with carbon nanotubes and a metal. In an implementation, the metal included in the heating material 102 may be at least one metal among silver (Ag), copper (Cu), nickel (Ni), gold (Au), platinum (Pt), and palladium (Pd).

In a region of the heating part 101, a side surface of a first protective film layer 130 facing the busbar 40, that is, a lower surface of the first protective film layer 130, may be attached to the heating material 102. In other words, the heating material 102 may be attached to and supported by the lower surface of the first protective film layer 130.

The busbar coupling part may be disposed around the heating part 101 and fixedly coupled to the busbar 40. The busbar coupling part may include a double-sided adhesive tape 155 whose one side and the other side are fixedly attached to the busbar 40 and a second protective film layer 140.

The double-sided adhesive tape 155 may be spaced apart from the heating material 102 and formed in a planar shape surrounding the heating material 102. A tape attachment part 148 which may be attached to the double-sided adhesive tape 155 to support the double-sided adhesive tape 155 may be formed around the heating material 102 on the second protective film layer 140.

An open opening 142 to expose the heating material 102 to face the busbar 40 may be formed in the second protective film layer 140. According to the above configuration, the heating material 102 may be in direct contact with the intermediate portion 50 of the busbar 40. The double-sided adhesive tape 155 may be firmly attached to a heating apparatus coupling part 52 around the intermediate portion 50 of the busbar 40. Accordingly, the contact between the heating part 101 and the busbar 40 can be reliably maintained.

Referring to FIGS. 1 to 7 and 10 again, the pair of busbar heating apparatuses 100A and 100B according to the first embodiment of the present disclosure may include the plurality of terminal parts 115 and one switch part 120.

The plurality of terminal parts 115 may be electrically coupled to the busbars 40 to supply electric energy to the plurality of heating parts 101, specifically, to the heating material 110. In each of the busbar heating apparatuses 100A and 100B, the terminal part 115 may be provided as a pair of terminal parts 115. The pair of terminal parts 115 may be located one by one beside the heating parts 101 on both end portions of each of the busbar heating apparatuses 100A and 100B in the longitudinal direction.

The pair of terminal parts 115 may be formed of a metal material. Each of the terminal parts 115 may be welded to the busbar 40 disposed to overlap the terminal part 115. Specifically, the terminal part 115 and the first cell coupling part 41 of the busbar 40 overlapping the terminal part 115 in the third direction may be welded. Annular welding spots 117 and 47 on which welding may be performed may be formed on the terminal part 115 and the first cell coupling part 41.

The switch part 120 may supply a current to a plurality of heating materials 102 belonging to the busbar heating apparatuses 100A and 100B so that the plurality of heating materials 102 emit heat when a temperature of the battery module 10 is lower than a preset reference temperature and may block the current being supplied to the plurality of heating materials 102 when a temperature of the battery module 10 is higher than or equal to the reference temperature.

A temperature of the battery module 10 may be measured by a temperature sensor 175 of a flexible printed circuit assembly (FPCA) 170 in real time. The switch part 120 may be accommodated in one connecting part 110 of the plurality of connecting parts 110 belonging to the busbar heating apparatuses 100A and 100B. The switch part 120 may be between the pair of protective film layers 130 and 140 which may overlap and be bonded. The switch part 120 may be electrically connected to the pair of terminal parts 115 and the plurality of heating materials 102.

The battery module 10 may further include the FPCA 170. The FPCA 170 may include a temperature sensor 175, a voltage sensor 180, and a control wire 171. The temperature sensor 175 may measure a temperature of the plurality of battery cells 11. The temperature of the plurality of battery cells 11 which may be measured by the temperature sensor 175 may be a temperature of the battery module 10.

The temperature sensor 175 may be provided as a plurality of temperature sensors 175. The temperature sensor 175 may be provided as a pair of temperature sensors 175. One of the pair of temperature sensors 175 may be closer to the first busbar heating apparatus 100A than to the second busbar heating apparatus 100B, and the other of the pair of temperature sensors 175 may be closer to the second busbar heating apparatus 100B than to the first busbar heating apparatus 100A.

The voltage sensor 180 may measure voltages of the plurality of busbars 40. The voltage sensor 180 may be provided as a plurality of voltage sensors 180 to correspond to the number of busbars 40 one to one. Each of the voltage sensors 180 may be electrically connected to a voltage sensor connecting part 45 which may be closer to the second cell coupling part 43 than to the first cell coupling part 41 of the busbar 40 through a method such as welding.

The control wire 171 may connect the plurality of voltage sensors 180 and the pair of temperature sensors 175 to a battery management system (BMS). The control wire 171 may be provided as a plurality of control wires 171. The plurality of control wires 171 may be connected to the BMS through a connector. Detected signals detected by the plurality of voltage sensors 180 and the pair of temperature sensors 175 may be transmitted to the BMS through the control wires 171.

The switch part 120 may be electrically connected to the BMS. In an implementation, between the pair of temperature sensors 175, a first temperature may be measured by the temperature sensor 175 that is closer to the first busbar heating apparatus 100A than to the second busbar heating apparatus 100B (e.g., the temperature sensor 175 located on the upper portion of the battery module 10 in FIG. 2). When the first temperature is lower than the reference temperature, the BMS may transmit a control signal corresponding to "ON" of the heating part 101 to the switch part 120 of the first busbar heating apparatus 100A, and thus the plurality of heating materials 102 of the first busbar heating apparatus 100A heat the plurality of battery cells 11. The plurality of heating materials 102 may themselves be heated by electric energy discharged from the plurality of battery cells 11.

When the plurality of heating materials 102 are continuously heated and the above-described first temperature measured by the temperature sensor 175 closer to the first busbar heating apparatus 100A becomes higher than or equal to the reference temperature, the BMS may transmit a control signal corresponding to "OFF" of the heating part 101 to the switch part 120 of the first busbar heating apparatus 100A, and thus the heating of the plurality of heating materials 102 of the first busbar heating apparatus 100A may be stopped.

Similarly, among the pair of temperature sensors 175, a second temperature may be measured by the temperature sensor 175 closer to the second busbar heating apparatus 100B than to the first busbar heating apparatus 100A (e.g., the temperature sensor 175 located on the lower portion of the battery module 10 in FIG. 2). When the second temperature is lower than the reference temperature, the BMS may transmit a control signal corresponding to "ON" of the heating part 101 to the switch part 120 of the second busbar heating apparatus 100B, and thus the plurality of heating materials 102 of the second busbar heating apparatus 100B heat the plurality of battery cells 11. The plurality of heating materials 102 may themselves be heated by electric energy discharged by the plurality of battery cells 11.

When the plurality of heating materials 102 are continuously heated, and the above-described second temperature measured by the temperature sensor 175 closer to the second busbar heating apparatus 100B becomes higher than or equal to the reference temperature, the BMS may transmit a control signal corresponding to "OFF" of the heating part 101 to the switch part 120 of the second busbar heating apparatus 100B, and thus the heating of the plurality of heating materials 102 of the second busbar heating apparatus 100B may be stopped.

According to embodiments of the present disclosure, a busbar can be heated in a low-temperature environment, and thus the temperatures of battery cells and a battery module connected to the busbar can be rapidly raised. Accordingly, the charging and discharging performance degradation of the battery cells and the battery module including the plurality of battery cells can be suppressed.

By way of summation and review, secondary batteries for driving devices or energy storage are widely used in not only small devices such as portable electronic devices, but also in medium-to-large devices such as electric vehicles and energy storage systems (ESSs). Particularly, in the case of the medium-to-large devices, one battery module may be formed so that a plurality of battery cells are electrically connected to each other to increase the output power and/or capacity of the battery.

It is known that the charge and discharge performance of the battery module at temperatures below zero, that is, at low temperatures, may be lower than the charge and discharge performance at room temperature and the decrease of the charge and discharge performance may be proportional to the decrease of the temperature.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A busbar heating apparatus (100A, 100B) comprising:
a plurality of heating parts (101), each of the plurality of heating parts including a heating material (102) adapted to be heated by electric energy and suitable to be in contact with a plurality of busbars (40) of a battery module (10, 20) to heat the plurality of busbars; and
one or more connecting parts (110) electrically connecting the plurality of heating parts (101).

2. The busbar heating apparatus according to claim 1, wherein the heating material (102) includes carbon nanotubes.

3. The busbar heating apparatus according to one of the preceding claims, wherein the plurality of heating parts (101) and the one or more connecting parts (110) are alternately disposed.

4. The busbar heating apparatus according to one of the preceding claims, wherein the one or more connecting parts (110) include:
a pair of protective film layers (130, 140) which overlap and are bonded; and
an electric wire (160) formed of a conductive material and extending in the pair of protective film layers.

5. The busbar heating apparatus according to one of the preceding claims, further comprising a plurality of terminal parts (115) adapted to be electrically coupled to the busbars (40) to supply the electric energy to the plurality of heating parts (101).

6. The busbar heating apparatus according to one of the preceding claims, further comprising a switch part (120) adapted to supply a current to the plurality of heating materials (102) to heat the plurality of heating materials when a first temperature of the battery module (10, 20) is lower than a predetermined reference temperature and to block the current being supplied to the plurality of heating materials when the first temperature of the battery module is higher than the reference temperature or equal to the reference temperature.

7. The busbar heating apparatus according to claim 6, wherein the switch part (120) is accommodated in one of the one or more connecting parts (110).

8. A battery module (10, 20) comprising:
a plurality of battery cells (11);
a plurality of busbars (40) which electrically connect the plurality of battery cells; and
a busbar heating apparatus (100A, 100B) according to one of the preceding claims, wherein the plurality of heating parts (101) are in contact with the plurality of busbars (40) to heat the plurality of busbars.

9. The battery module according to claim 8, wherein the one or more connecting parts (110) of the busbar heating apparatus (100A, 100B) are spaced apart from the busbars (40).

10. The battery module according to claim 8 or 9, wherein:
the heating parts (101) of the busbar heating apparatus (100A, 100B) further include a protective film layer (130, 140) attached to the heating material (102); and
the busbar heating apparatus further includes busbar coupling parts (41, 42) disposed around the plurality of heating parts and fixedly coupled to the protective film layer and to the busbars (40) so that contact between the plurality of heating parts and the plurality of busbars is maintained.

11. The battery module according to claim 10, wherein the busbar coupling parts (41, 42) include a metal layer (105) with one side welded to the busbar (40) and the other side attached to the protective film layer (140).

12. The battery module according to claim 10, wherein the busbar coupling parts (41, 42) include a double-sided adhesive tape (155) whose one side and the other side are fixedly attached to the busbar (40) and the protective film layer (140).

13. The battery module according to claim 8, wherein each of the plurality of busbars (40) includes:
a first cell coupling part (41) electrically coupled to one battery cell of the plurality of battery cells (11);
a second cell coupling part (42) electrically coupled to another battery cell of the plurality of battery cells; and
an intermediate portion (50) which is located between the first cell coupling part (41) and the second cell coupling part (42) and in contact with a heating part of the plurality of heating parts (101).

14. The battery module according to one of claims 8 to 13, wherein:
the plurality of battery cells (11) are arranged in one line in a first direction;
the busbar heating apparatus includes a pair of busbar heating apparatuses (100A, 100B); and
the pair of busbar heating apparatuses are spaced apart from each other and extend in the first direction.

15. The battery module according to one of claims 8 to 14, further comprising a flexible printed circuit assembly, FPCA, (170) including:
a voltage sensor (180) for measuring voltages of the plurality of busbars;
a temperature sensor (175) for measuring temperatures of the plurality of battery cells; and
a control wire (171) electrically connecting the voltage sensor and the temperature sensor to a battery management system, BMS.
